# EUROPEAN PATENT APPLICATION

(11) **EP 1 120 987 A1**
(43) Date of publication of application: **01.08.2001**
(21) Application number: 00850017.5
(22) Date of filing: 28.01.2000
(51) Int. Cl.: H04Q 11/00, H04B 10/00

(54) **Cross-connect protection**

(71) Applicant: Telefonaktiebolaget L M Ericsson (Publ), 126 25 Stockholm (SE)
(72) Inventor: Öberg, Magnus, 129 40 Hägersten (SE); Lundberg, Anders, 184 41 Akersberga (SE); Almström, Erland, 169 59 Solna (SE); Storm, Simon, 125 55 Älvsjö (SE)
(74) Representative: Jansson, Margareta Karin

(57) **Abstract**

The present invention is a method to protect a cross-connect OXC/OEXC used to forward at least one signal AB from a main input IN to a main output OUT. Said method comprises the following step:
- Dividing the at least one signal AB into two substantially identical signal parts, a first signal part A and a corresponding signal part B.
- Routing the at least one first signal part A through a first cross-connect OXC1/OEXC1, from the input IN to the output OUT.
- Detection of a failure affecting the at least one first signal part A.
- Interruption of the routing path for the at least one first signal part A.
- Routing the at least one corresponding signal part B through a second cross-connect OXC2/OEXC2, from the input IN to the output (OUT).

## Description

### TECHNICAL FIELD OF THE INVENTION

The present invention relates to a method and an arrangement to protect a cross-connect used to forward signals from a main input to a main output.

### DESCRIPTION OF RELATED ART

Optical transmission systems utilizing optical fibers as the optical signal transmission medium are gaining in popularity. This is especially because their substantial immunity to interference or external influences and their ability to transmit a great number of communications channels in the same physical medium - the optical fiber, without cross talk between the channels. Optical cross-connects is used to obtain a flexible connection between different parts of an optical network. Typically, a cross-connect has 8 to 128 input ports and the same amount of output ports. By a remote command the signal into an input port can be switched in order to exit at any one of the output ports that is not already occupied. A cross-connect is a very central unit in a transmission network and a malfunctioning cross-connect without any back up would be fatal. The need to provide duplicated data transmission paths in telecommunication switching systems and computers is well known. A typical back-up solution would be to have two parallel switch cores and an array of 1x2 switches in the front in order to drop a broken switch core and instead select a functional one. In the US patent 5,594,581 is disclosed an optical line terminal of a type including sets of optical signal processing components arranged in an identical manner in mutually redundant parallel branches. An input switch routes an incoming signal for processing into either one of two branches to the exclusion of the other. On detection of faulty processing in the one branch, the input switch is switched into it's other state in which it reroutes the incoming optical signal into the other branch for processing therein. A disadvantage with the solution in the US patent is the indispensable need to have a reliable input switch. A malfunctioning input switch will influence both branches and affect the redundancy benefits.

### SUMMARY OF THE INVENTION

The present invention solves the problem with lack of reliability of a 1x2-switch that routes an incoming signal from a main input via either one of two redundant cross-connects to a main output. By malfunctioning, the switch will affect both paths in the redundant cross-connect system and the redundancy benefits will be wasted. Another problem that is solved by the invention is the high cost of the 1x2-switch.

The problems are solved by the invention by, instead of routing the incoming signal via the 1x2-switch, the incoming signal is divided into two substantially identical signal parts. Only one of the two signal parts is thereafter forwarded to the main output.

More in detail the problem is solved by a method that divides the incoming signal from a main input into two substantially identical signal parts, a so called first signal part and a corresponding second signal part. The first signal part is routed from the main input, through a first cross-connect, to a main output. Upon detection of a failure affecting the first signal part, the routing path for the first signal part is interrupted and the corresponding second signal part is routed through a second cross-connect, from the input to the output.

An arrangement according to the invention includes means to divide the input signal into two substantially identical signal parts. The arrangement further includes means to route either one of the signal parts to the main output and means to exclude the other one of the two identical signal parts.

The object of the present invention is to enhance reliability and remove a 1x2-switch, which by malfunctioning will negatively affect both paths in the redundant cross-connect system.

An advantage with the invention is the increase of reliability of the redundant switch core system

Another advantage is the decrease of cost for implementing the switch core system.

Yet another advantage is the support of active redundancy, i.e. the knowledge of back-up switch status in the redundant cross-connect system.

The invention will now be described more in detail with reference to exemplifying embodiments thereof and also with reference to accompanying drawings.

### DESCRIPTION OF THE DRAWINGS

Figure 1 is a block schematic illustration of a Wavelength Division Multiplexing optical network.

Figure 2 is a block schematic illustration of a cross-connect arrangement according to the invention.

Figure 3 is a block schematic illustration of a method to utilize the protection of the cross-connect arrangement.

Figure 4 is a flow chart disclosing the most important steps of the method to protect the cross-connect arrangement.

Figure 5 is a block schematic illustration of a cross-connect comprising an electrical switch core arrangement according to an embodiment of the invention.

Figure 6 is a block schematic illustration of a switch core arrangement according to another embodiment of the invention.

### DESCRIPTION OF PREFERRED EMBODIMENTS

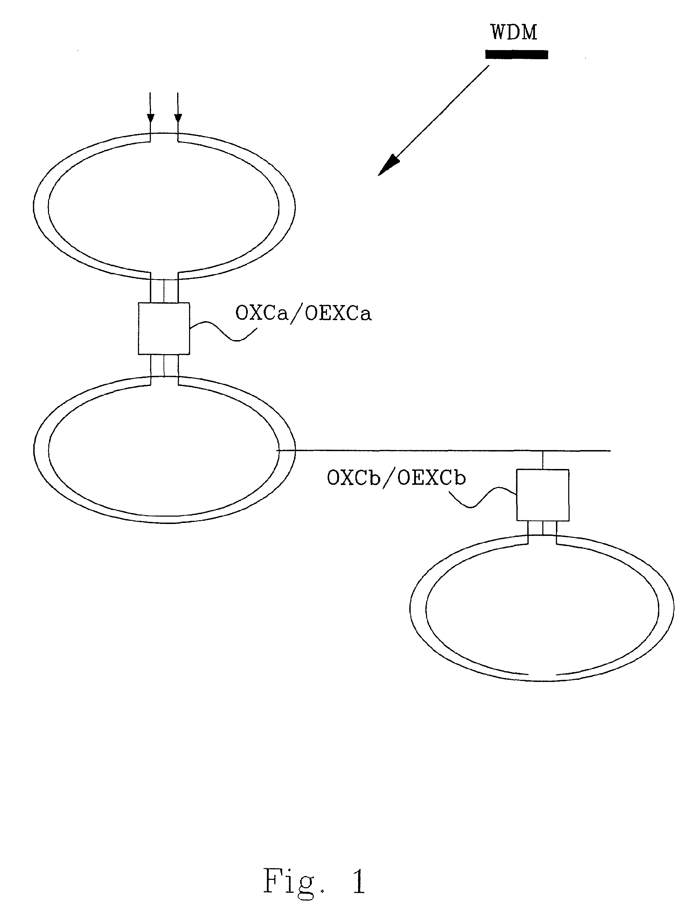

Figure 1 discloses a WDM optical network (WDM: Wavelength Division Multiplexing). Optical cross-connects OXCa/OEXCa and OXCb/OEXCb are used to obtain a flexible connection in between different parts of the WDM optical network. Typically, an optical cross-connect has 8-128 input ports and the same amount of output ports. By a remote command a signal into one of the input ports can be switched in order to exit at any one of the output ports that is or can be made available. The optical cross-connects can be "all-optical" OXCa and OXCb, i.e. the signal through a cross-connect is carried by light (photons) all the way. The optical cross-connect can also be opto-electrical OEXCa and OEXCb, i.e. the light signal entering the cross-connect is converted to electrical signals by an opto/electrical converter at the entrance. The electrical signal is then switched in an electrical switch core and converted to light again by an electrical/opto converter at the exit side of the cross-connect.

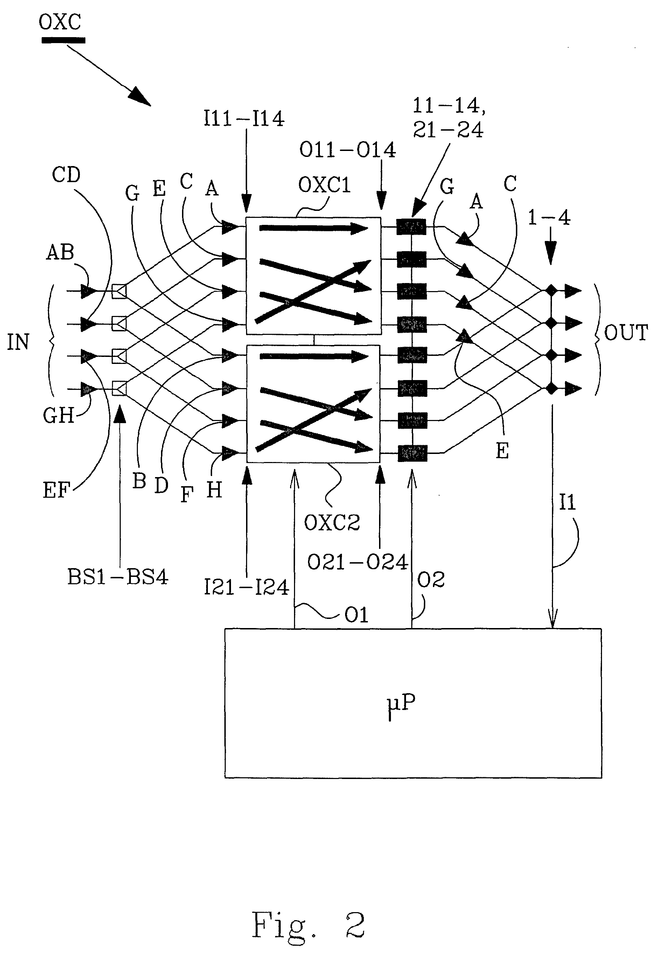

Figure 2 discloses in a first embodiment of the invention, an optical cross-connect. The cross-connect includes a first cross-connect OXC1 and second cross-connect OXC2. The cross-connects OXC1 and OXC2 are mutually redundant and each one includes four input ports and four output ports. An arrow symbol in the figure points out four input ports I11-I14 of the first connect OXC1. Output ports 011-014 are in the same way pointed out by an arrow symbol. Another arrow points out four input ports I21-I24 of the second connect OXC2, and output ports 021-024 are pointed out by an arrow symbol in the figure. Each cross-connect is able to switch an input signal from one of its input ports to one of the output ports. The two cross-connects are identical and incoming signals arriving to corresponding inputs in the two connects, for example inputs I11 and I21, will be forwarded to the same outputs O11, 021 in both cross-connects OXC1 and OXC2. In figure 2 the first cross-connect is prepared for forwarding signals from I11 to O11, from I12 to 013, from I13 to 014 and from I14 to 012. In the figure an example is shown of the use of the cross-connect. Signals from I11 to I14 may of course in other examples be forwarded to anyone of O11 to 014. The second cross-connect is in the same way prepared for forwarding signals from I21 to 021, from I22 to 023, from I23 to 024 and from I24 to 022. A main input IN receives four optical input signals AB, CD, EF, GH. The four optical input signals AB, CD, EF, GH are, each one, divided into two optical signal parts by optical beam splitters BS1-BS4. A first beam splitter BS1 divides signal AB into two signal parts, A and B. The two signal parts A and B are substantially identical. Signal CD is in the same way divided into two signal parts, C and D, by a second beam splitter BS2. A third beam splitter BS3 divides in the same manner signal EF into two signal parts, E and F, and signal GH is divided into two signal parts G and H by a fourth beam splitter BS4. Signal part A is forwarded by the first cross-connect OXC1 from input port I11 to output port O11. In the same way the corresponding signal part B is forwarded by the second cross-connect OXC2 from input port I21 to output port 021. Each output 011, 012, 013 and 014 in the first cross-connect OXC1 is arranged to be associated with a main output OUT. The corresponding outputs 021, 022, 023 and 024 of the second cross-connect OXC2 are also arranged to be associated with the main output OUT. Between each one of the outputs 011-014, 021-024 and the main output OUT, a path breaker is arranged. Totally four path breakers 11-14 and 21-24 are arranged between each one of the cross-connects OXC1 and OXC2 and the main output OUT. A microprocessor µP is used to control the cross-connect system in figure 2. An output control signal O1 from the microprocessor is used to control the set-up of the cross-connects, i.e. the internal paths within the cross-connects OXC1 and OXC2. Another output control signal 02 from the microprocessor is used to control the path breakers 11-14, 21-24. The control signal 02 can influence each one of the path breakers connected to the cross-connects OXC1 and OXC2. In figure 2 the four output signals A, G, C and E from the first cross-connect OXC1 are forwarded to the main output by means of the path breakers 11-14. The four output signals B, D, F and H from the second cross-connect OXC2 are on the other hand prevented to reach the main output OUT by the path breakers 21-24. An input control signal I1 to the microprocessor µP gather quality measurements from the signals arriving to the main output. The quality measurements are collected from measure points 1-4. One measure point for each signal A, G, C and E. As will be seen later in the description, the location of the path breakers and the measure points shown in figure 2, are just examples of locations where these elements may be situated. Other examples will be presented later in the description.

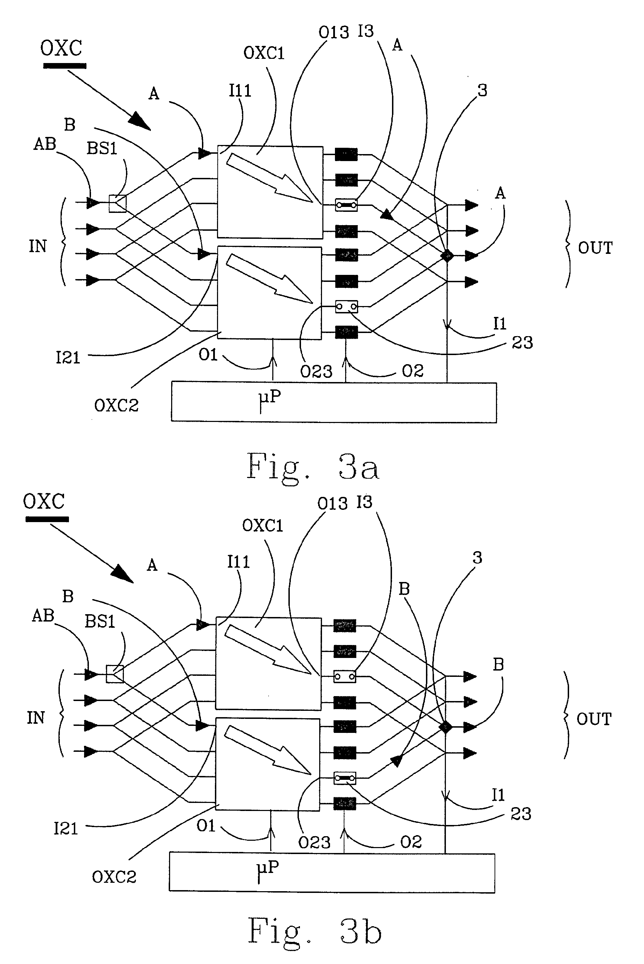

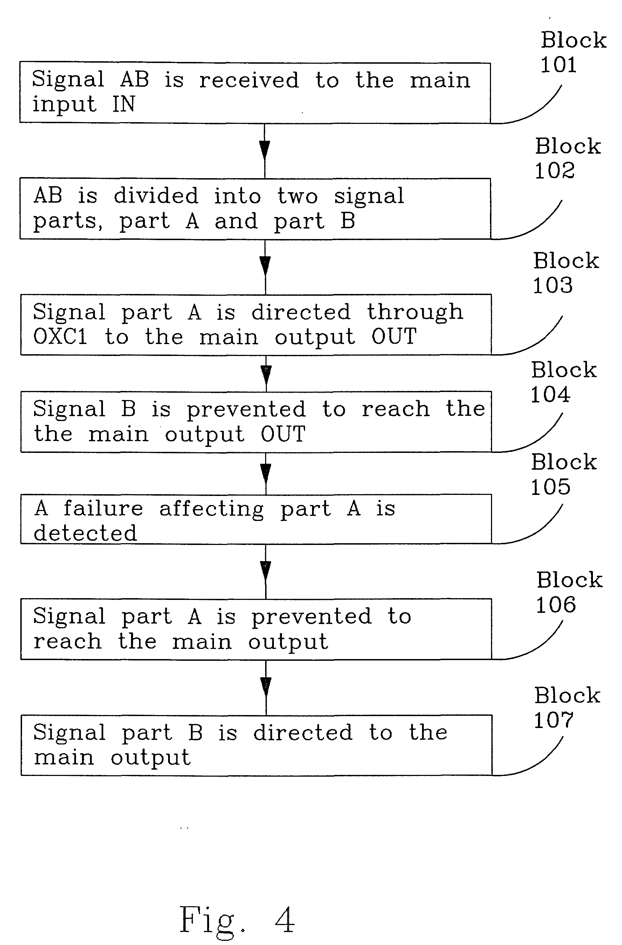

Figure 3 discloses the same cross-connect that was earlier described in figure 2. In figure 3, a method according to the invention is shown. The figure consists of two figure parts, figure 3a and figure 3b. Figure 3a discloses the situation of the cross-connect before a switchover after a failure has taken place. Figure 3b discloses what happens after a switchover when a failure affecting a signal passing through the cross-connect system has been detected. The most essential steps in the method will be mentioned and disclosed with a flow chart in figure 4. Unlike in figure 2, only one of the input signals is shown in figure 3 - the optical signal AB. The reason for this is sake of clarity of figure 2. For the same reason, only the two path breakers 13 and 23 of the totally eight path breakers have been shown more in detail in figure 3. The two optical cross-connects OXC1 and OXC2 are configured as is shown in figure 3, i.e. input port I11 is switched-over to output port 013 and input port I21 is switched-over to output port 023. The input control signal I1 is received by the microprocessor µP and may detect a failure affecting the signals passing through the cross-connect and reaching the output OUT. For the sake of clarity of figure 3 only the third measure point 3 is shown in the figure. The method that now will be explained more in detail shows the effect after a failure affecting a signal being forwarded from the main input IN to the main output OUT. The method is divided into two parts, before and after a failure has been detected. The first part of the method includes the following steps illustrated by figure 3a:
- The optical signal AB is received to the main input IN in the cross-connect system.
- The beam splitter BS1 divides the optical signal AB into two substantially identical signal parts, a first signal part A and a second signal part B, a so called corresponding signal part B.
- The first signal part A is received by input port I11 in the first cross-connect OXC1.
- The corresponding second signal part B is received by input port I21 in the second cross-connect OXC2.
- The first signal part A is forwarded through the first cross-connect OXC1 from the input port I11 to the output port 013.
- The corresponding second signal part B is forwarded through the second cross-connect OXC2 from the input port I21 to the output port 023.
- The first signal part A passes the path breaker 13, which now is open, and reaches the main output OUT. The first signal part A is directed from the main input IN, through the first optical cross-connect OXC1, via the path breaker 13, to the main output OUT.
- The second signal part B is blocked by the closed path breaker 23. The signal part B is thereby prevented from reaching the main output OUT.

The second part of the method includes the following steps illustrated by figure 3b:
- A failure is detected by the microprocessor µP after the processor has received and evaluated the input control signal I1. The failure was detected in measure point 3 and information that disclosed quality of the signal passing measure point 3, i.e. signal part A, was forwarded by the input control signal, from measure point 3 to the microprocessor.
- The information received from the input control signal I1 is prepared by the microprocessor µP and instructions are forwarded to the output control signal 02.
- The output control signal 02 influences the path breaker 13 to block the path between the cross-connect OXC1 and the main output OUT. The signal part A is thereby prevented from reaching the main output OUT.
- The output control signal 02 influences the path breaker 23 to open the path between the cross-connect OXC2 and the main output OUT. The signal part B thereby reaches the main output OUT.

Above has been discussed the inventive method when a failure occur in a cross-connect. In figure 4 the most essential steps of the method are shown in a flow chart. The method disclosed in figure 4 comprises the following steps:
- The optical signal AB is received to the main input IN, according to a block 101.
- The optical signal AB is divided into two substantially identical signal parts A and B, according to a block 102.
- The first signal part A is forwarded through the first cross-connect OXC1, passes the open path breaker 13 and reaches the main output OUT, according to a block 103.
- The corresponding, second signal part B is forwarded through the second cross-connect OXC2 but is interrupted by the closed path breaker 23 and thereby prevented from reaching the main output OUT, according to a block 104.
- A failure affecting the first signal part A is detected by the microprocessor µP, according to a block 105.
- The output control signal 02 influences the path breaker 13 to block the path between the first cross-connect OXC1 and the main output OUT, according to a block 106. The first signal part A is thereby prevented to reach the main output OUT.
- The output control signal 02 influences the path breaker 23 to open the path between the second cross-connect OXC2 and the main output OUT, according to a block 107. The second signal part B thereby reaches the main output OUT.

A variation of the method discussed above will now briefly be mentioned. Instead of interrupting only the path used for the signal that is affected by a failure, i.e. the first signal part A in the above example, the interruption will influence all parts related to the same cross-connect OXC1. In the embodiment above, the step when the failure was detected, will in this embodiment be followed by the following steps (see references in figure 2 and 3):
- The output control signal 02 influences the path breakers 11-14 to block all the paths between the first cross-connect OXC1 and the main output OUT. All first signal parts A, C, E, G are thereby prevented from reaching the main output OUT.
- The output control signal 02 influences the path breaker 21-24 to open the paths between the second cross-connect OXC2 and the main output OUT. All corresponding signal parts B, D, F, and H thereby reach the main output OUT.

In the embodiment described above, a failure affecting only one signal part passing the cross-connect results in a "shut-off" of the whole cross-connect for signal transport to the main output. Instead, the cross-connect forwards corresponding signal parts to the main output.

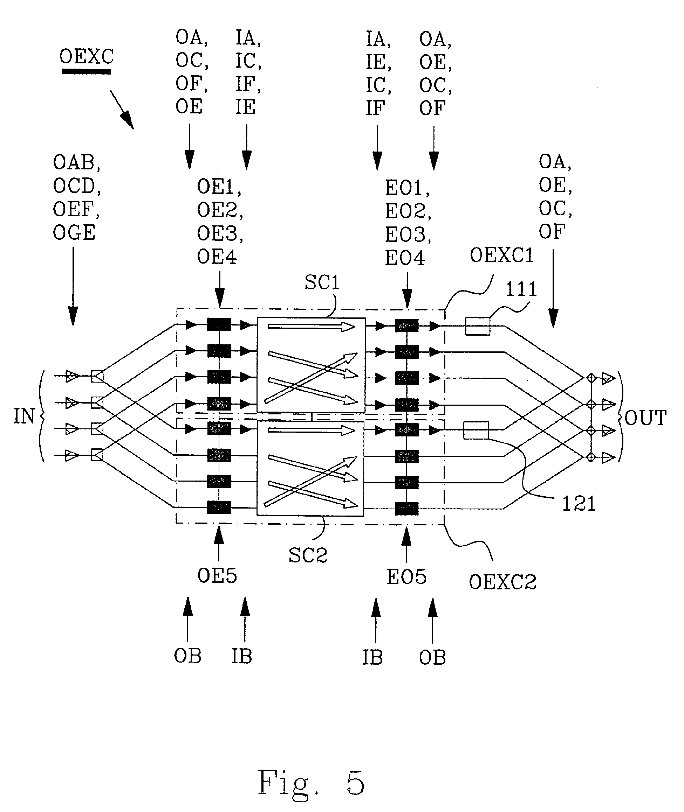

In figure 5 yet another embodiment of the invention is disclosed. Figure 5 discloses an optical/electrical cross-connect OEXC. The cross-connect OEXC comprises two optical/electrical cross-connects, a first cross-connect OEXC1 and a second cross-connect OEXC2. In the figure references for all incoming signals to the first optical/electrical cross-connect OEXC1 are shown but only references for one incoming signal to the second optical/electrical cross-connect OEXC2. This is to enhance the clarity of figure 5. However, like in the earlier embodiments, the two cross-connects OEXC1 and OEXC2 are identical. Each one of the cross-connects comprises an electrical switch core, a first electrical switch core SC1 in the first cross-connect OEXC1 and a second electrical switch core SC2 in the second cross-connect OEXC2. Four optical signals OAB, OCD, OEF, OGE enter a main input IN. Each optical signal is divided into two substantially identical signal parts, so called first signal parts and corresponding second signal parts. In figure 5 the first optical signal parts OA, OC, OF and OE are shown and also the corresponding signal part OB. The first signal parts are forwarded to the first cross-connect OEXC1. Signal parts forwarded to the second cross-connect OEXC2, i.e. the corresponding second signal parts, are not disclosed in figure 5, except for the corresponding part OB. The four optical first signal parts OA, OC, OF and OE are converted into electrical signal parts IA, IC, IF and IE in opto/electrical converters OE1, OE2, OE3 and OE4 within the first optical/electrical cross-connect OEXC1. The four electrical signal parts IA, IC, IF and IE enter the first electrical switch core SC1 and are then forwarded through the electrical switch core SC1 to the configured outputs. The four electrical signal parts IA, IE, IC and IF are again converted into four optical signal parts OA, OE, OC and OF in electro/optical converters EO1, E02, E03 and E04 within the first optical/electrical cross-connect OEXC1. The optical part OA is thereafter transported to the main output OUT via a path breaker 111. The corresponding signal OB passes in the same way an opto/electrical converter OE5 and an electro/optical converter E05 and finally a path breaker 121 before entering the main output OUT. This embodiment has shown a similar inventive solution as the embodiments before but instead of using optical cross-connects, optical signals were converted into electrical signals and electrical cross-connects were used. Conversion into electrical signals makes signal validation possible. This would not be possible with optical signals. Another possible solution obtaining this possibility and still use an optical cross-connect is to convert a signal two times before it enters an optical switch core, first from optical to electrical and then from electrical to optical. After passing the optical switch core, the signal is converted again, first from optical to electrical and then from electrical to optical.

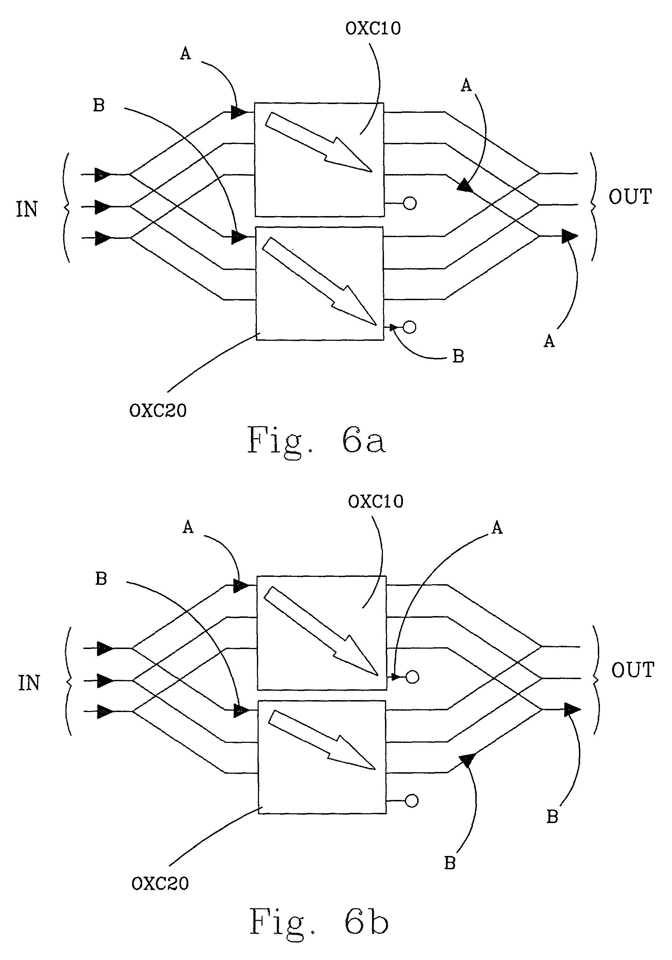

In figure 6 yet another embodiment of the invention is disclosed. An optical cross-connect is shown in figure 6.

The cross-connect comprises a first optical cross-connect OXC10 and a second optical cross-connect OXC20, which are mutually redundant. Figure 6 is divided into two figure parts, figure 6a and figure 6b. Figure 6a discloses the cross-connect before a failure was detected and a switch over took place. In figure 6b the cross-connect is disclosed after detection of the failure and a switch over has been performed. The two optical cross-connects OXC10 and OXC20 are of a similar type as the optical cross-connects discussed earlier in figure 3, however with some fundamental differences. In figure 6 both cross-connects OXC10 and OXC20 have three input ports and four output ports. One of the four output ports leads to a "dead end", symbolically outlined in figure 6. Another difference is that the earlier discussed path-breakers have been removed. Another important difference is that the two cross-connects no longer have identical switch-over configuration, i.e. signals arriving to the corresponding inputs in the two cross-connects are not always switched-over to corresponding outputs. This will be further explained in the example below. An optical signal AB is received by the main input and divided into two signal parts. The two parts are a first signal part A and a corresponding signal part B. The first signal part A is forwarded to an input of the first cross-connect OXC10. The signal part B is forwarded to a corresponding input of the second cross-connect OXC20. In figure 6a, before detection of a signal failure, the first signal A is switched-over to an output port while the corresponding part B is switched-over to the "dead end", i.e. it is not further forwarded. The first signal A is thereafter directed to the main output OUT. In figure 6b, a situation after a failure has been detected is shown. The first connect OXC10 has been switched-over and the first signal A is now directed to the "dead-end", i.e. it is not more further forwarded. The second connect OXC20 instead directs the corresponding signal B to the main output OUT. To summarize, one of the two redundant cross-connects OXC10 and OXC20 always directs one of two identical signal parts to the main output. Corresponding signal parts, not directed to the main output, are always directed to a "dead-end". The main benefit compared to the previous examples is that path-breakers no longer are needed.

Different variations are possible within the scope of the invention. The cross-connect can for example take different appearances without affecting the idea behind the invention. It is also possible according to the invention to select and drop different routing paths of a signal from a main input to a main output. The path breakers can be located anywhere after the signal parts have been created and before the main output, for example between the main input and the cross-connects. The path breakers shown in figure 5 can be removed and instead the electro/optical converters can be used as path breakers. Also the measure points can be located somewhere else than above described. The location of measure points is important for the support of active redundancy. By using a measure point located in a non-active path in the cross-connect system, detection of back-up switch status can be performed. The invention is thus not restricted to the above described and illustrated exemplifying embodiments, and modifications can be made within the scope of the clams.

## Claims

1. Method to protect a cross-connect system (OXC; OEXC) used to forward at least one signal (AB) from a main input (IN) to a main output (OUT), said method being characterized by the following step:
- dividing the at least one signal (AB) into two substantially identical signal parts, a first signal part (A) and a corresponding signal part (B);
- routing the at least one first signal part (A) through a first cross-connect (OXC1; OEXC1), from the input (IN) to the output (OUT)
- detection of a failure affecting the at least one first signal part (A).

2. Method to protect a cross-connect system (OXC; OEXC) according to claim 1, said method including the following further steps:
- interruption of the routing path for the at least one first signal part (A);
- routing the at least one corresponding signal part (B) through a second cross-connect (OXC2; OEXC2), from the input (IN) to the output (OUT).

3. Method to protect a cross-connect system (OXC; OEXC) used to forward optical signals (AB, CD, EF, GH) from a main input (IN) to a main output (OUT), said method being characterized by the following step:
- dividing each of the signals (AB, CD, EF, GH) into two substantially identical signal parts, so called first signal parts (A, C, E, G) and corresponding signal parts (B, D, F, H);
- routing the first signal parts (A, C, E, G) through a first cross-connect (OXC1; OEXC1), from the input (IN) to the output (OUT)
- detection of a failure affecting at least one of the first signal parts (A, C, E, G).

4. Method to protect a cross-connect system (OXC; OEXC) according to claim 3, said method including the following further steps:
- interruption of the routing paths for the parts (A, C, E, G) routed through the first cross-connect (OXC1; OEXC1) to the output (OUT);
- routing the corresponding signal parts (B, D, F, H), through a second cross-connect (OXC2; OEXC2), from the input (IN) to the output (OUT).

5. Arrangement for protection of a cross-connect system (OXC; OEXC) used to forward at least one signal (AB; OAB) from a main input (IN) to a main output (OUT), said arrangement being characterized by:
- means for dividing the at least one signal (AB; OAB) into two substantially identical signal parts, a first signal part (A; OA) and a corresponding signal part (B; OB) ;
- means for routing the at least one first signal part (A; OA) through a first cross-connect (OXC1; OEXC1), from the input (IN) to the output (OUT)
- means for detecting a failure affecting the at least one first signal part (A; OA).

6. Arrangement for protection of a cross-connect system (OXC; OEXC) according to claim 5, said arrangement comprising:
- means for interruption of the routing path for the at least one first signal part (A; OA) ;
- means for routing the at least one corresponding signal part (B; OB) through a second cross-connect (OXC2; OEXC2), from the input (IN) to the output (OUT).

7. Arrangement for protection of a cross-connect system (OEXC) according to claim 5 or 6, the signal parts (OA, OB) being optical and the first and second cross-connects (OEXC1, OEXC2) each comprising an electrical switch core (SC1, SC2), said arrangement comprising:
- means for transforming the optical signal parts (OA, OB) into electrical signal parts (IA, IB) before the parts enter the electrical switch cores (SC1, SC2);
- means for transforming the electrical signal parts (IA, IB) into optical signal parts (OA, OB) after the parts leave the electrical switch cores (SC1, SC2) but before they enter the main output (OUT).

8. Arrangement for protection of a cross-connect system (OXC; OEXC) according to any of claim 6 or 7, said means for interruption of the routing path being located between the first cross-connect (OXC1; OEXC1) and the output (OUT).

9. Arrangement for protection of a cross-connect system (OXC; OEXC) according to any of claim 6 or 7, said means for interruption of the routing path being located within the first cross-connect (OXC1; OEXC1).

10. Arrangement for protection of a cross-connect system (OXC; OEXC) according to claim 6 or 7, said means for interruption of the routing path being located between the input (IN) and the first cross-connect (OXC1; OEXC1).

11. Arrangement for protection of a cross-connect system (OXC; OEXC) according to any of claim 5-10, said means for detection of the failure being located between the first cross-connect (OXC1; OEXC1) and the main output (OUT).
